# EUROPÄISCHE PATENTSCHRIFT

(11) **EP 2 782 877 B1**
(45) Veröffentlichungstag und Bekanntmachung des Hinweises auf die Patenterteilung: **25.05.2016**
(21) Anmeldenummer: 12794916.2
(22) Anmeldetag: 22.11.2012
(51) Int. Cl.: C03B 19/14, C03B 37/014

(54) **VERFAHREN ZUR HERSTELLUNG VON SYNTHETISCHEM QUARZGLAS DURCH ABSCHEIDUNG AUS DER DAMPFPHASE UND MITTELS ZERSTÄUBUNG DES FLÜSSIGEN SILOXANEINSATZMATERIALS**
METHOD FOR PRODUCING SYNTHETIC QUARTZ GLASS BY DEPOSITION FROM THE VAPOR PHASE AND BY ATOMIZING THE LIQUID SILOXANE STARTING MATERIAL
PROCÉDÉ DE PRODUCTION DE VERRE DE SILICE SYNTHÉTIQUE PAR DÉPÔT À PARTIR DE LA PHASE VAPEUR ET PAR PULVÉRISATION DE LA MATIÈRE DE DÉPART SILOXANE LIQUIDE

(30) Priorität: 25.11.2011 DE 102011119339; 09.12.2011 US 201161569163 P
(43) Veröffentlichungstag der Anmeldung: 01.10.2014
(73) Patentinhaber: Heraeus Quarzglas GmbH & Co. KG, 63450 Hanau (DE)
(72) Erfinder: FABIAN, Heinz, 63762 Großostheim (DE); RÖPER, Jürgen, 06809 Roitzsch (DE)
(74) Vertreter: Staudt, Armin Walter
(86) Internationale Anmeldenummer: PCT/EP2012/073345
(87) Internationale Veröffentlichungsnummer: WO 2013/076195

(56) Entgegenhaltungen:
- WO-A1-01/66476
- WO-A1-90/10596
- WO-A1-99/03781
- WO-A1-99/06331
- WO-A1-2004/065314
- US-A- 5 110 335
- US-B1- 6 546 757
- US-B1- 6 705 127

## Beschreibung

Die Erfindung betrifft ein Verfahren zur Herstellung von synthetischem Quarzglas, umfassend die Verfahrensschritte:
(A) Bereitstellen eines flüssigen SiO₂-Einsatzmaterials, welches mehr als 70 Gew.-% des Polyalkylsiloxans D4 aufweist,
(B) Verdampfen des flüssigen SiO₂-Einsatzmaterials (105) in einen gasförmigen SiO₂-Einsatzdampf (107),
(C) Umsetzen des SiO₂-Einsatzdampfes (107) zu SiO₂-Partikeln,
(D) Abscheiden der SiO₂-Partikel auf einer Ablagerungsfläche (160) unter Bildung eines SiO₂-Sootkörpers (200),
(E) Verglasen des SiO₂-Sootkörpers unter Bildung des synthetischen Quarzglases.

### Stand der Technik

Zur Herstellung von synthetischem Quarzglas für kommerzielle Anwendungen werden chlorfreie Einsatzmaterialien erprobt. Als Beispiel seien Monosilane, Alkoxysilane und Siloxane genannt. Eine besonders interessante Gruppe chlorfreier Einsatzmaterialien bilden die Polyalkylsiloxane (auch kurz als "Siloxane" bezeichnet), die beispielsweise aus der EP 463 045 A1 bekannt sind. Die Stoffgruppe der Siloxane lässt sich unterteilen in offenkettige Polyalkylsiloxane und in geschlossenkettige Polyalkylsiloxane. Die Polyalkylsiloxane haben die allgemeine Summenformel SiₚOₚ(R)_{2P}, wobei P eine ganze Zahl ≥ 2 ist. Der Rest "R" ist eine Alkylgruppe, im einfachsten Fall eine Methylgruppe.

Polyalkylsiloxane zeichnen sich durch einen besonders hohen Anteil an Silizium pro Gewichtsanteil aus, was zur Wirtschaftlichkeit ihres Einsatzes bei der Herstellung von synthetischem Quarzglas beiträgt. Wegen der großtechnischen Verfügbarkeit in hoher Reinheit wird derzeit Octamethylcyclotetrasiloxan (OMCTS) bevorzugt eingesetzt. Diese Substanz wird gemäß einer von General Electric Inc. eingeführten Notation auch als "D4" bezeichnet, wobei "D" die Gruppe [(CH₃)₂Si]-0- repräsentiert.

Aus US 6,705,127 B1 ist ein Verfahren zur Herstellung von synthetischem Quarzglas bekannt, bei dem als Einsatzmaterial für SiO₂ ein Polyaklysiloxan, wie beispielsweise flüssiges OMCTS (D4), oder Mischungen von Polyalkylsiloxanen eingesetzt werden. Das flüssige Einsatzmaterial wird verdampft, zu SiO₂-Partikeln umgesetzt und diese auf einem Substratkörper abgeschieden und verglast. Da Verdampfen umfasst eine Injektionsphase in einer Expansionskammer, in der das Einsatzmaterial in feine Tröpfchen mit Durchmessern im Bereich von 10 bis 100 µm zerstäubt wird.

In der US 5,110,335 A wird zur Abscheidung von SiO₂-Sootpartikeln eine Ultraschallzerstäubung unter Einsatz von SiCl₄ oder TEOS als flüssige Einsatzmaterialen und die Verbrennung in einer Sauerstoff-Methan-Flamme vorgeschlagen.

### Technische Aufgabenstellung

Das siliziumhaltige Einsatzmaterial kann dem Verbraucher, wie etwa einem Abscheidebrenner, in flüssiger Form zugeführt werden. In der Regel wird das flüssige Einsatzmaterial aber mittels eines Verdampfers in eine gasförmige oder dampfförmige Phase überführt und dem Verbraucher ein kontinuierlicher Gasstrom zugeführt. Bei den bekannten Verdampfungssystemen wird die zu verdampfende Flüssigkeit mit einer heißen Oberfläche in Kontakt gebracht. Heiße Oberflächen können insbesondere bei organischem Einsatzmaterial zu unvorhergesehenen Veränderungen führen, wie beispielsweise Zersetzungen oder Polymerisationen, so dass nicht ohne Weiteres nachvollziehbar ist, inwieweit die Zusammensetzung des Dampfes noch der der Flüssigkeit entspricht. Daraus ergibt sich eine gewisse Variabilität und Unreproduzierbarkeit in der Prozessführung, die zu Fehlern im Partikelbildungsprozess und zu Inhomogenitäten im Sootaufbau führen kann.

Es ist die Aufgabe der vorliegenden Erfindung, ein Verfahren zur Herstellung von SiO₂-Sootkörpern mit hoher Materialhomogenität zu schaffen, bei dem die genannten Nachteile vermieden werden.

### Allgemeine Beschreibung der Erfindung

Diese Aufgabe wird ausgehend von dem eingangs genannten Verfahren erfindungsgemäß dadurch gelöst, dass das Verdampfen des erhitzten SiO₂-Einsatzmaterials eine Injektionsphase in einer Expansionskammer umfasst, in der das SiO₂-Einsatzmaterial in feine Tröpfchen zerstäubt wird, wobei die Tröpfchen einen mittleren Durchmesser von weniger als 5 µm, vorzugsweise weniger als 2 µm, aufweisen.

Im Unterschied zu den bekannten Verfahren, bei denen ein Einsatzmaterial eingesetzt wird, das aus einer einzigen, möglichst reinen und definierten Siliziumverbindung (z.B. SiCl₄) besteht, wird erfindungsgemäß ein SiO₂-Einsatzmaterial vorgeschlagen, welches Octamethylcyclotetrasiloxan (hier auch als D4 bezeichnet) als Hauptkomponente enthält.

Die Besonderheit des erfindungsgemäßen Verfahrens besteht darin, dass die Verdampfung des SiO₂-Einsatzmaterials sich durch einen besonders gleichmäßigen Wärmeeintrag auszeichnet. Im Stand der Technik ist es bekannt, Flüssigkeiten über heiße Flächen strömen zu lassen, um so einen Wärmeeintrag und eine Verdampfung zu erzielen. Allerdings führt ein solches Vorgehen bei einem SiO₂-Einsatzmaterial, welches auf dem Polyalkylsiloxan D4 basiert, zu einer Gelbildung, die den Verdampfer und/oder die heißen Flächen verstopfen kann. Um jenen Nachteil zu überwinden, ist es erfindungsgemäß vorgesehen, dass das SiO₂-Einsatzmaterial in einer Expansionskammer verdampft wird. Dabei strömt das SiO₂-Einsatzmaterial durch eine Zuführungsleitung in die Expansionskammer ein. Entgegen bekannten Verfahren, zeichnet sich das erfindungsgemäße Verfahren dadurch aus, dass eine Zerstäuberdüse genutzt wird. Diese ermöglicht es, das flüssige SiO₂-Einsatzmaterial in mikrometergroße Flüssigkeitskugeln zu zerstäuben. Solcherart Flüssigkeitskugeln - auch als Tropfen bezeichnet - weisen eine große Oberfläche im Verhältnis zu dem Volumen auf. Durch die Kugelform ist weiterhin sichergestellt, dass ein gleichmäßiger Wärmeeintrag in die Flüssigkeit stattfindet. Somit wird der Flüssigkeitstropfen mit den D4-Molekülen gleichmäßig erwärmt und eine thermische Aufspaltung der Polyalkylsiloxane verhindert. Dadurch wird die Menge der im Verdampfungsprozess entstehenden Gele deutlich reduziert, was in einer homogeneren Dichteverteilung des Sootkörpers - und damit des Quarzglases - resultiert.

Um die erfindungsgemäßen Vorteile zu erlangen, ist es notwendig, dass der Zerstäuberkopf dafür sorgt, dass das flüssige SiO₂-Einsatzmaterial in feine Tröpfchen zerstäubt wird, deren mittlerer Durchmesser weniger als 5 Mikrometer (im Weiteren auch "µm") beträgt. Im Rahmen einer Mehrzahl von Messungen konnte ermittelt werden, dass die Gelbildung bzw. die Inhomogenitäten im Sootmaterial besonders stark reduziert wurden, wenn die Tröpfchen einen mittleren Durchmesser zwischen 0,5 µm und 2 µm aufweisen. Besonders bevorzugt Messreihen ergaben sich zwischen 0,5 µm und 20 nm (d₅₀-Wert). Der Medianwert oder d₅₀-Wert ist dabei als Maß für die mittlere Teilchengröße die wichtigste Kenngröße. Der d₅₀-Wert beschreibt jenen Wert, bei dem 50 Prozent der Tröpfchen feiner sind und die anderen 50% grober sind als d₅₀. Darüberhinaus sollte die Schwankungsbreite der mittleren Tröpfchengröße möglichst gering sein. Besonders bevorzugte Ergebnisse konnten erzielt werden, wenn die Tröpfchengrößen in der 2σ Varianz nur um + 1 µm und - 0,35 µm schwankten. Diese geringe Schwankungsbreite führte dazu, dass ein sehr gleichmäßiger Nebel feiner Tröpfchen in den Innenraum der Expansionskammer eingesprüht wurde. Jene gleichmäßigen Flüssigkeitstropfen aus SiO₂-Einsatzmaterial können dann durch Wärmeeinstrahlung der inneren Wände der Expansionskammer und/oder Wärmeübertrag aus einem erhitzten Trägergas in die Gasphase überführt werden. Ziel des erfindungsgemäßen Verfahrens ist es dabei auch, zu verhindern, dass die Tröpfchen des SiO₂-Einsatzmaterials auf Innenwände der Expansionskammer auftreffen und erst an diesen verdampfen. Vielmehr soll die Verdampfung ausschließlich im freien Raum der Expansionskammer stattfinden. Zwar mag die Innenwand der Expansionskammer erwärmt sein und die Wärmestrahlung zu einer Verdampfung der Flüssigkeitstropfen des SiO₂-Einsatzmaterials beitragen, aber es muss verhindert werden, dass ein direkter Kontakt zwischen den erhitzten - metallischen - Innenwänden und dem SiO₂-Einsatzmaterial auftritt. Denn, wie dargelegt, führt ein Kontakt des SiO₂-Einsatzmaterials mit den erhitzten Innenwänden der Expansionskammer zu einer Gelbildung, die erfindungsgemäß verhindert werden soll.

Im Rahmen der Erfindung umfasst der Begriff Polyalkylsiloxan sowohl lineare als auch zyklische Molekularstrukturen. Allerdings ist es bevorzugt, wenn das SiO₂-Einsatzmaterial als Hauptbestandteil D4 aufweist. Die Notation D3, D4, D5 entstammt einer von General Electric Inc. eingeführten Notation, bei der "D" die Gruppe [(CH₃)₂Si]-0- repräsentiert. Somit beschreibt D3 Hexamethylcyclotrisiloxan, D4 Octamethylcyclotetrasiloxan, D5 Decamethylcyclopentasiloxan und D6 Dodecamethylcyclohexasiloxan. In einer bevorzugten Variante ist die Hauptkomponente des SiO₂-Einsatzmaterials D4. So ist der Anteil an D4 mindestens 70 Gew.-%, insbesondere mindestens 80 Gew.-%, bevorzugt mindestens 90 Gew.-%, besonders bevorzugt mindestens 94 Gew.-% an dem SiO₂-Einsatzmaterial.

Im Rahmen der Erfindung beschreibt der Begriff "Taupunkt" die Temperatur, bei der sich ein Gleichgewichtszustand von kondensierender und verdunstender Flüssigkeit einstellt.

Im Rahmen der Erfindung werden die Begriffe "Verdünnungsmittel" und,, "Trägergas" gleichbedeutend verwendet.

Im Rahmen der Erfindung findet ein flüssiges SiO₂-Einsatzmaterial Verwendung, welches aus mehr als 70 Gew.-% des Polyalkylsiloxanes Octamethylcyclotetrasiloxan D4 und dessen linearem Homolog aufgebaut ist. Zusätzlich kann das flüssige SiO₂-Einsatzmaterial noch Zusatzkomponenten anderer Polyalkylcyclosiloxane wie D3, D5, D6, D7 und D8 aufweisen. Die unter dem Begriff "Zusatzkomponenten" zusammengefassten zusätzlichen Bestandteile des Einsatzmaterials haben somit Molekülmassen und Siedetemperaturen, die sich nach oben und/oder nach unten von der relativen Molekülmasse von D4 (etwa 297 g/mol) und in der Siedetemperatur von D4 (etwa 175° C) unterscheiden. Das möglicherweise Zusatzkomponenten aufweisende, flüssige SiO₂-Einsatzmaterial wird einer Reaktionszone in gasförmiger Form zugeführt und dabei durch Oxidation und/oder Hydrolyse und/oder Pyrolyse zu SiO₂ zersetzt.

Mit dem hier offenbarten erfindungsgemäßen Verfahren ist es möglich, auch sehr große Mengen SiO₂-Einsatzmaterial gleichmäßig und schnell zu verdampfen. Somit kann die Anzahl der Verdampfer reduziert werden, die benötigt wird, um großvolumige, zylinderförmige Sootkörper mit einem Außendurchmesser von mehr als 300 mm aufzubauen. Erfindungsgemäß weisen die Verdampfer Verdampfungsraten von 15 bis 25 kg pro Stunde vom Polyalkylsiloxan D4 auf. Nur mittels des erfindungsgemäßen Verfahrens ist es möglich, eine so große Menge SiO₂-Einsatzmaterial in die Gasphase zu überführen. Eine Nutzung bekannter Verdampfungstechnologien würde voraussetzen, dass große, stark erhitzte Metallflächen zur Verdampfung genutzt würden. Im Rahmen des Kontakts des SiO₂-Einsatzmaterials mit den stark erhitzten Metallflächen würden sich aber Polymerisation und/oder thermische Aufspaltung des D4 ergeben. Diese Nachteile könnten dann zu einer Verstopfung und/oder Verschlechterung der Leistungsfähigkeit des Verdampfers, sowie zu Inhomogenitäten in dem Sootkörper bzw. dem Quarzglas führen. Nur die Zerstäubung des SiO₂-Einsatzmaterials in seiner flüssigen Form in kleine Flüssigkeitstropfen mit einem geringen Durchmesser ermöglicht es, große Mengen des SiO₂-Einsatzmaterials gleichmäßig zu erhitzen, ohne dass dabei Gele oder sonstige Abfallstoffe entstehen können, die sich nachteilig auf die Wirkung des Verdampfers und/oder die Homogenität des Sootkörpers auswirken können.

Um eine gleichmäßige Umsetzung der flüssigen Tröpfchen des SiO₂-Einsatzmaterials in den SiO₂-Einsatzdampf zu erzielen, wird vorteilhafterweise ein Trägergas genutzt, welches durch die Expansionskammer des Verdampfers hindurch strömt. Vorteilhafterweise wird dabei eine Menge zwischen 8 und 20 m³/h eines Inertgases wie Stickstoff oder Argon genutzt. Dieses Trägergas sollte einen maximalen Vordruck zwischen 2 und 8 bar besitzen, um so zum einen schnell genug durch die Expansionskammer hindurchzuströmen, andererseits aber nicht zu einer Beeinträchtigung der Zerstäuberdüse zu führen. Vorteilhafterweise ist das Trägergas vorgewärmt und weist eine Temperatur im Bereich zwischen 130° C bis 180° C auf. Damit ist es möglich, ein Gemisch aus SiO₂-Einsatzdampf und Trägergas zu erzeugen, welches ebenfalls zwischen 130° C und 180° C aufweist und mit einem Druck zwischen 1,1 und 2 bar aus der Expansionskammer in Richtung des Verdampfers geführt wird. Die Temperatur innerhalb des Verdampfers sollte 200° C nicht überschreiten, da das D4 sonst polymerisieren könnte.

Eine Verringerung der Breite des Spektrums der Tröpfchengröße kann dadurch erzeugt werden, dass auf einen Flüssigkeitsstrahl eine gleichförmige, zyklische Störung aufprägt wird. Dies kann dadurch erreicht werden, dass man an der Zerstäuberdüse eine mechanische Schwingung oder eine Ultraschallquelle anlegt. Die Störung verursacht eine regelmäßige Ausbreitungswelle längs des Strahls, die schließlich den Strahl in nahezu gleichförmige Tröpfchen aufbricht. Erfindungsgemäß soll die Ausgestaltung des Zerstäuberkopfs derart sein, dass nur ein schmales Spektrum von Tröpfchengrößen erzeugt wird.

Herstellungsbedingt haben Sootkörper eine gewisse Schichtstruktur, wobei die Schichten Bereiche lokaler Änderungen der Dichte oder der chemischen Zusammensetzung darstellen. Es hat sich gezeigt, dass bei erfindungsgemäßem Einsatz eines Verdampfungsprozesses ein SiO₂-Sootkörper mit überraschend hoher Homogenität, insbesondere mit gleichmäßiger und schwacher Ausprägung der Schichtstruktur erhalten wird. Dies erklärt sich durch die Nutzung des erfindungsgemäßen Verfahrens, welches die Erzeugung von kleinen Tröpfchen bei einem schmalen Spektrum von Tröpfchengrößen beinhaltet.

Eine weitere vorteilhafte Ausgestaltung des erfindungsgemäßen Verfahrens zeichnet sich dadurch aus, dass die Zusatzkomponente D3 und/oder die Zusatzkomponente D5 maximal zwischen 0,1 Gew.-% und 2 Gew.-% eines Gesamtgewichtes des flüssigen SiO₂-Einsatzmaterials stellen, insbesondere die Summe der Gewichtsanteile mD3 + mD5 maximal im Bereich zwischen 0,5 und 3 Gew.-%, bevorzugt maximal zwischen 0,2 und 2 Gew.-% liegt. Da Dodekamethylcyclohexasiloxan (D6) und deren lineare Homologen wegen ihrer großen Molekülmasse im Vergleich zu D4 bereits in geringer Konzentration eine merkliche Veränderung der Reaktionszone und des Partikelbildungsprozesses bewirken, beträgt der Gewichtsanteil von D6 vorzugsweise nicht mehr als 100 Gew.-ppm. Durch die geringen Mengen der Zusatzkomponente D3 und/oder D5 lässt sich die Temperatur und das Spektrum der Tröpfchengrößen besser optimieren. Dies resultiert in einem besonders homogenen SiO₂-Sootkörper.

Bei den bekannten Verdampfungssystemen wird die zu verdampfende Flüssigkeit mit einer heißen Oberfläche in Kontakt gebracht. Heiße Oberflächen können insbesondere bei organischem Einsatzmaterial zu unvorhergesehenen Veränderungen führen, wie beispielsweise Zersetzungen oder Polymerisationen, so dass nicht ohne Weiteres nachvollziehbar ist, inwieweit die Zusammensetzung des Dampfes noch der der Flüssigkeit entspricht. Daraus ergibt sich eine gewisse Variabilität und Unreproduzierbarkeit in der Prozessführung, die zu Fehlern im Partikelbildungsprozess und zu Inhomogenitäten im Sootaufbau führen kann.

Um diese Nachteile zu überwinden, ergibt sich eine weitere vorteilhafte Ausgestaltung des erfindungsgemäßen Verdampfungsprozesses dadurch, dass das Verdampfen die folgenden Schritte umfasst:
- Erhitzen des SiO₂-Einsatzmaterials,
- Einführen des erhitzten SiO₂-Einsatzmaterials in eine Expansionskammer, so dass zumindest ein erster Teil des SiO₂-Einsatzmaterials und/oder die Tröpfchen des SiO₂-Einsatzmaterials in Folge eines Druckabfalls verdampfen.

Im Rahmen dieser Ausgestaltung findet eine Erhitzung des SiO₂-Einsatzmaterials statt. Dabei werden Temperaturen des SiO₂-Einsatzmaterials zwischen 150° C und 200° C angestrebt. Höhere Temperaturen könnten gegebenenfalls zu einer Polymerisation führen. Als vorteilhaft hat sich die Verwendung eines Flüssig/Flüssig-Heizsystems erwiesen, bei dem das SiO₂-Einsatzmaterial mittels einer weiteren Flüssigkeit, wie etwa Öl, erhitzt wird. Durch einen Flüssig/Flüssig-Wärmetauscher findet eine gleichmäßige, konstante Erwärmung des SiO₂-Einsatzmaterials statt, ohne dass dabei singuläre, heiße Bereiche auftreten, wie dies etwa bei elektrischen Heizdrähten der Fall ist. Solcherart singulärer Heizpunkte führen schnell zu Polymerisationsreaktionen, die verhindert werden sollen. Nach dem Erhitzen des SiO₂-Einsatzmaterials findet ein Zerstäuben dieses erhitzten Materials in die Expansionskammer statt. Innerhalb der Expansionskammer werden das SiO₂-Einsatzmaterial und/oder die Tröpfchen des SiO₂-Einsatzmaterials in die Gasphase umgesetzt. Als besonders schonend für das SiO₂-Einsatzmaterial hat es sich herausgestellt, wenn diese Verdampfung in Folge eines Druckabfalls geschieht. Dazu kann beispielsweise das SiO₂-Einsatzmaterial als eine überkritische Flüssigkeit erhitzt werden. Nur durch einen entsprechenden Druck innerhalb der Aufheizvorrichtung wird ein Sieden des SiO₂-Einsatzmaterials verhindert. Bei der Expansion innerhalb der Expansionskammer entspannen sich das SiO₂-Einsatzmaterial und/oder die Tröpfchen des SiO₂-Einsatzmaterials derart, dass sie in die Gasphase übergehen. Als vorteilhaft haben sich Druckabfälle zwischen 1,8 und 5 bar herausgestellt.

Das erhitzte, unter Druck stehende Einsatzmaterial wird durch einen Zuführungskanal in die Expansionskammer eingeführt und dann über einen entsprechenden Sprühkopf vernebelt und/oder zerstäubt. Direkt über der Zerstäuberdüse kann der genannte Druckabfall stattfinden und so für eine schnelle, aber gleichmäßige Überführung des SiO₂-Einsatzmaterials in den SiO₂-Einsatzdampf Sorge tragen. Im Rahmen dieser Verfahrensschritte ist vorgesehen, dass das SiO₂-Einsatzmaterial unter Druck in die Zerstäuberdüse eingeführt wird. In der Zerstäuberdüse findet dann das Zerstäuben des flüssigen SiO₂-Einsatzmaterials in die SiO₂-Tröpfchen statt. Anschließend treten dann diese Tröpfchen - welche ebenfalls noch unter Druck stehen - in die Expansionskammer ein. Dort entsteht der eigentliche Druckabfall, der für das eigentliche Verdampfen der Tröpfchen sorgt. Vorteilhafterweise ist auch die Expansionskammer selber auf eine Temperatur im Bereich zwischen 150° C und 200° C erhitzt. Zwar soll die Expansionskammer nicht für die Verdampfung sorgen, aber die zur Verfügung gestellte Wärme, welche von den Wänden der Expansionskammer auch in das Innere der Expansionskammer strahlt, unterstützt die Verdampfung in Folge des Druckabfalls.

Das Größenspektrum der Tröpfchen hängt von einer Vielzahl an Einflussgrößen ab. Neben den rheologischen Eigenschaften der Flüssigkeit und der Geometrie der Zerstäubungsdüse ist dies insbesondere die Austrittsgeschwindigkeit der Flüssigkeit aus der Zerstäubungsdüse, die im Wesentlichen von der Druckdifferenz bestimmt wird. Innerhalb des genannten Druckdifferenzbereichs zerfällt der austretende Flüssigkeitsstrahl aufgrund turbulenter Strömung zu feinen Tropfen mit enger Tropfengrößenverteilung.

Eine weitere vorteilhafte Ausgestaltung des erfindungsgemäßen Verdampfungsprozesses ergibt sich dadurch, dass das Verdampfen die Schritte umfasst:
- Erhitzen des Si02- Einsatzmaterials,
- Einführen des erhitzten Si02- Einsatzmaterials in die Expansionskammer,
- Vermischen des Si02-Einsatzmaterials und/oder der Tröpfchen des Si02-Einsatzmaterials mit einem erhitzten Verdünnungsmittel, so dass zumindest ein zweiter Teil Si02-Einsatzmaterials in Folge einer Senkung des Taupunktes verdampft.

Im Rahmen dieser Ausführungsvariante wird zur Verdampfung des SiO₂-Einsatzmaterials und/oder der Tröpfchen des SiO₂-Einsatzmaterials ein Verdünnungsmittel genutzt. Vorteilhafterweise handelt es sich bei dem Verdünnungsmittel um ein inertes Trägergas, welches die Expansionskammer durchströmt. Aus diesem Grund wird im Folgenden der Begriff Verdünnungsgas und der Begriff Trägergas als gleichbedeutend angesehen.

Im Rahmen dieser Ausführungsvariante findet ebenfalls ein Erhitzen des SiO₂-Einsatzmaterials statt. Wie schon dargelegt, hat es sich als vorteilhaft erwiesen, wenn die Erhitzung mittels eines Wärmetauschers geschieht und zu einer Erhitzung des SiO₂-Einsatzmaterials auf eine Temperatur im Bereich von 120 bis 200°C führt. Das SiO₂-Einsatzmaterial wird durch eine entsprechende Rohrleitung in die Expansionskammer eingeführt und dort über eine Zerstäuberdüse zerstäubt. Um einen möglichst gleichmäßigen Übergang des SiO₂-Einsatzmaterials in den SiO₂-Einsatzdampf zu erzielen, kann ein Verdünnungsmittel wie etwa Stickstoff entgegen der Einsprührichtung der Tröpfchen des SiO₂-Einsatzmaterials in die Expansionskammer eingeführt werden. Alternativ kann das Verdünnungsmittel in Richtung der Einsprührichtung der Tröpfchen des SiO₂-Einsatzmaterials in die Expansionskammer und/oder in Richtung der Einsprührichtung des SiO₂-Einsatzmaterials auf den Ultraschallzerstäuber geführt werden. Der zweite Teil des flüssigen SiO₂-Einsatzmaterials bzw. der Tröpfchen des SiO₂-Einsatzmaterials verdampft beim Eintritt in die Expansionskammer, da der Partialdruck des flüssigen SiO₂-Einsatzmaterials in der Kammer vermindert ist und so dessen Taupunkt ebenfalls sinkt. Die Besonderheit dieses Verfahrens besteht darin, dass durch die Senkung des Partialdruckes auch jene Temperatur reduziert wird, bei der das flüssige SiO₂-Einsatzmaterial in die Gasphase übertritt. Je nach Menge des zugefügten, erhitzten Trägergases sinkt der Taupunkt des SiO₂-Einsatzmaterials um bis zu 30° C. Entsprechend bedarf es keiner so starken Erhitzung des SiO₂-Einsatzmaterials im Vorlauf. Als Trägergase bzw. Verdünnungsmittel haben sich neben Stickstoff auch Argon oder Helium bewährt. Hierbei handelt es sich um Gase, die sich in Bezug auf Polyalkylsiloxane inert verhalten, so dass Oxidations-, Polymerisations- oder Zersetzungsreaktionen zwischen der Flüssigkeit und dem Trägergas, insbesondere unter Druck und höherer Temperatur, und damit eine nicht reproduzierbare Veränderung der Zusammensetzung des Einsatzmaterials vermieden werden.

Wie auch bei der oben geschilderten Ausführungsvariante des Verdampfens durch Druckabfall, ermöglicht auch ein Verdampfen durch Senkung des Partialdrucks, dass das Verdampfen des flüssigen SiO₂-Einsatzmaterials nicht durch metallische Oberflächen geschieht. Jene metallischen Oberflächen weisen häufig eine nicht homogene Temperaturverteilungen auf, so dass es teilweise zu Polymerisationseffekten an den besonders heißen Bereichen kommen kann. Um jene zu verhindern, ist erfindungsgemäß vorgesehen, dass die Verdampfung durch den Partialdruck und/oder den Druckabfall mit dem Eintritt des SiO₂-Einsatzmaterials bzw. der Tröpfchen des SiO₂-Einsatzrnaterials in die Expansionskammer geschieht, ohne dass die Flüssigkeit an die Innenwände der Expansionskammer gelangt und dort verdampft.

Eine Ausführungsvariante des erfindungsgemäßen Verfahrens zeichnet sich dadurch aus, dass das SiO₂-Einsatzmaterial in Folge des Druckabfalls und/oder der Senkung des Partialdruckes zu mindestens 99,995 Gew.-%, besonders bevorzugt mindestens 99,9995 Gew.-% in den SiO₂-Einsatzdampf überführt wird. Bei dieser Ausführungsform ergeben sich drei Varianten:
1. die Überführung der Tröpfchen des flüssigen SiO₂-Einsatzmaterials in die Gasphase findet nur durch den Druckabfall beim Eintritt in die Expansionskammer statt, oder
2. die Überführung der Tröpfchen des flüssigen SiO₂-Einsatzmaterials in die Gasphase findet in Folge der Senkung des Taupunktes statt oder
3. die Überführung der Tröpfchen des flüssigen SiO₂-Einsatzmaterials in die Gasphase findet sowohl durch den Druckabfall als auch in Folge der Senkung des Taupunktes statt.

Um eine vollständige Umsetzung zu erzielen, hat es sich als vorteilhaft erwiesen, wenn das flüssige SiO₂-Einsatzmaterial in sehr feine Tröpfchen zerstäubt wird. Deren mittlerer Durchmesser sollte dabei kleiner als 5 µm, vorzugsweise weniger als 2 µm, besonders bevorzugt weniger als 1 µm aufweisen. So wird das flüssige Einsatzmaterial umgesetzt in eine Wolke von kleinen Tröpfchen, die durch die Expansion als Folge des Druckabfalles gleichmäßig verdampfen können. Der mittlere Durchmesser ergibt sich als das das arithmetische Mittel, also dem Quotient aus der Summe aller beobachteten Werte und der Anzahl der Werte.

Um diese Aufteilung der Flüssigkeit in kleine Tröpfchen zu unterstützen, hat es sich als sinnvoll erwiesen, Ultraschallzerstäuber einzusetzen, welche durch die Einwirkung von Ultraschall zu einer gleichmäßigen und feinen Zerstäubung des SiO₂-Einsatzmaterials führen. Im Rahmen der Erfindung bezeichnet Ultraschall einen Schall mit Frequenzen, die oberhalb des vom Menschen wahrgenommenen Bereiches liegen. Das umfasst Frequenzen zwischen 16 kHz und 1,6 GHz. Bei einem Ultraschallzerstäuber kann eine Flüssigkeit mit oder ohne Druckapplikation und mit oder ohne Erhitzung zerstäubt werden. So kann eine mit der Flüssigkeit benetzte Piezokeramik mittels einer hochfrequenten Wechselspannung in Schwingungen versetzt werden. In Folge dessen bilden sich in der Flüssigkeit Ultraschallwellen aus, deren Maximalstärke auf einer bestimmten Flüssigkeitshöhe erreicht wird und die das Entstehen eines sogenannten Ultraschallrüssels bewirken. Aus diesem Ultraschallrüssel lösen sich kleine Flüssigkeitströpfchen oder Aerosole, die für die gewünschte Anwendung benutzt werden können. Der Vorteil von Ultraschallzerstäubern besteht in der gleichmäßigen Zerstäubung veränderlicher Volumenströme, dem nahezu konstanten Tropfenspektrum über den gesamten Volumenstrombereich und der geringen Eigengeschwindigkeit der Tropfen, woraus sich eine gute Beeinflussbarkeit des Strahls ergibt. So kann durch Ultraschallzerstäuben reproduzierbar eine enge Tröpfchengrößenverteilung erzeugt werden, was sich auf die Gleichmäßigkeit des Verdampfungsergebnisses positiv auswirkt.

Als weitere Alternative führt diese Ausführungsvariante des erfindungsgemäßen Verfahrens auf, dass die Verdampfung des flüssigen Einsatzmaterials sowohl durch die Nutzung des Druckabfalles als auch durch die Senkung des Partialdruckes geschieht. Diese Variante hat sich als besonders vorteilhaft erwiesen, da zur Erstellung von Quarzglaszylindern mit Durchmessern von bis zum 300 mm große Mengen an flüssigem Material verdampft werden müssen. Um die benötigten Materialmengen schonend und gleichmäßig von der flüssigen Phase in die Gasphase umzusetzen, hat es sich als bevorzugt erwiesen, wenn ein zumindest für Teilkomponenten überhitztes SiO₂-Einsatzmaterial in die Expansionskammer eingeführt wird und dort durch Druckabfall und mittels der Nutzung eines Verdünnungsmittels in die Gasphase überführt wird. Diese Kombination der Verdampfung in Folge eines Druckabfalls und einer Senkung des Taupunktes ermöglicht es, dass von dem flüssig in den Verdampfer eingebrachten SiO₂-Einsatzmaterial nur sehr geringe Anteile (weniger als 20 ppm, bevorzugt weniger als 10 ppm, besonders bevorzugt weniger als 5 ppm) nicht verdampfen. In einzelnen Versuchen konnte der Anteil an nicht verdampften SiO₂-Einsatzdampf sogar auf weniger als 2,5 ppm reduziert werden.

Wie dargelegt, lässt sich das flüssige SiO₂-Einsatzmaterial leichter und gleichmäßiger in die Gasphase überführen, wenn die einzelnen zu verdampfenden Mengen jeweils gering sind und eine große Oberfläche aufweisen. Erfindungsgemäß wird dieses Ziel dadurch erreicht, dass die Flüssigkeit des SiO₂-Einsatzmaterials in feine Tröpfchen zerstäubt wird. Die zerstäubten Tröpfchen können dann über den Druckabfall und/oder die Vermischung mit dem erhitzten Verdünnungsmittel/Trägergas in die Gasphase überführt werden. Es hat sich als günstig erwiesen, wenn der Kontakt der feinen Tröpfchen mit dem heißen Trägergas in der Expansionskammer erfolgt, die auf einer Temperatur im Bereich von 150°C bis 200°C gehalten wird. Bei einer Temperatur von weniger als 150 °C besteht eine gewisse Gefahr, dass Tröpfchen nicht vollständig verdampfen, so dass Flüssigkeit in die Reaktionszone eingeschleppt wird, was zu Inhomogenitäten im Partikelbildungsprozess und zu Fehlern im Sootkörperaufbau führt, wie etwa Blasen. Bei Temperatur oberhalb von 200°C steigt die Tendenz, dass ansonsten energetisch gehemmte Reaktionen mit unreproduzierbaren und unerwünschten Reaktionsprodukten, insbesondere von Zersetzungen und Polymerisationsreaktionen.

Eine weitere Ausführungsvariante des erfindungsgemäßen Verfahrens zeichnet sich dadurch aus, dass die in der Zerstäuberdüse erzeugten sehr kleine, wenige Mikrometer große Tröpfchen mit einem - über einen Wärmetauscher zunächst erwärmt - Trägergas (Verdünnungsgas) vermischt werden. Dieses Verfahren kann so ausgelegt werden, dass es nicht notwendig ist das flüssige SiO₂-Einsatzmaterial vorzuwärmen. Bei dieser Variante findet ein Vermischen des Trägergases und des flüssigen SiO₂-Einsatzmaterials vor der eigentlichen Zerstäubung ein Tröpfchen oder während der Zerstäubung in der Zerstäuberdüse statt.

Eine weitere Ausführungsvariante des erfindungsgemäßen Verfahrens zeichnet sich dadurch aus, dass beim Einführen des SiO₂-Einsatzmaterials in die Expansionskammer und/oder an die Zerstäuberdüse eine Zusammensetzung des SiO₂-Einsatzmaterials mittels eines Konzentrationsdetektors gemessen wird. Das zugeführte SiO₂-Einsatzmaterial und/oder die Tröpfchen des SiO₂-Einsatzmaterials werden dabei mittels des Konzentrationsdetektors, wie etwa eines Gaschromatographen - analysiert. Eine ähnliche Analysestation mit einem Konzentrationsdetektor kann auch am Ausgang der Expansionskammer angeordnet sein und die Zusammensetzung des SiO₂-Einsatzdampfes ermitteln. Einer oder beide Detektoren können Teil eines Qualitätsmanagementsystems sein und die gemessene Zusammensetzung an ein Rechnersystem übermitteln, wo die Qualität der zugefügten Materialien und Dämpfe überwacht wird.

Die feinen Tröpfchen stellen eine große Oberfläche bereit, die ein schnelles und effizientes - also energiesparendes - und insbesondere ein vollständiges Verdampfen des flüssigen Einsatzmaterials ermöglicht. Auf diese Weise sollten insbesondere Veränderungen der Zusammensetzung durch Zersetzung, Polymerisation oder Destillation weitgehend vermieden und eine definierte Zusammensetzung des dem Verbraucher zugeführten SiO₂-Einsatzmaterials und ein reproduzierbarer Partikelbildungsprozess gewährleistet werden. Das hier offenbarte Verfahren ermöglicht die Herstellung von Quarzglas mit sehr hoher Qualität. Durch die geringen Inhomogenitäten des Sootkörpers lassen sich qualitativ hochwertige Quarzgläser erstellen, die bevorzugt für Telekommunikationsfasern, optische Fasern eingesetzt werden.

Die hier offenbarten Verfahren weisen die folgenden Vorteile gegenüber herkömmlich bekannten Verfahren auf: (1) die Homogenisierung des SiO₂-Einsatzdampfes, um so ein Homogenisierung des Sootkörpers zu erreichen; (2) eine Vereinfachung des Verdampfungsprozesses, da erfindungsgemäß auf eine vollständige Umsetzung des flüssigen Einsatzmaterials in den gasförmigen SiO₂-Einsatzdampf abgezielt wird und (3) die Fähigkeit, die Verdampfungstemperatur durch Zugabe eines Verdünnungsgases während des Verdampfungsprozesses beträchtlich zu vermindern, um so eine alle Fraktionen des Einsatzmaterials, ohne temperaturbedingte chemische Reaktionen in die Gasphase zu überführen.

Weitere Vorteile, Merkmale und Einzelheiten der Erfindung ergeben sich aus den Unteransprüchen und der nachfolgenden Beschreibung, in der unter Bezugnahme auf die Zeichnungen ein Ausführungsbeispiel der Erfindung im einzelnen beschrieben sind. Dabei können die in den Ansprüchen und der Beschreibung erwähnten Merkmale jeweils einzeln für sich oder in beliebiger Kombination erfindungswesentlich sein.

### Ausführungsbeispiel

Im Einzelnen zeigt:
- **Figur 1**: eine Vorrichtung zur Durchführung des erfindungsgemäßen Verfahrens zur Herstellung eines SiO₂-Sootkörpers in schematischer Darstellung,
- **Figur 2**: ein schematisches Diagramm der verschiedenen Elemente des erfindungsgemäßen Quarzglasherstellungssystems und
- **Figur 3**: eine schematische Darstellung einer Verdampfungskammer.

Der Ausgangspunkt des erfindungsgemäßen Verfahrens ist dabei die Bildung eines Gasstromes aus einem SiO₂-Einsatzdampf 107, der als Hauptkomponente D4 enthält. Der Gasstrom wird einer Reaktionszone zugeführt, in der der SiO₂-Einsatzdampf unter Bildung amorpher SiO₂-Partikel durch Pyrolyse, Oxidation oder Hydrolyse zu SiO₂ umgesetzt wird. Das sich anschließende Abscheiden der amorphen SiO₂-Partikel auf einer Ablagerungsfläche 160 führt zur Bildung eines porösen SiO₂-Sootkörpers 200, der durch Verglasung ein synthetisches Quarzglas bildet. Um dabei die Herstellung von großvolumigen zylinderförmigen Sootkörpern 200 mit Außendurchmessern von mehr als 300 mm mit verbesserter Materialhomogenität zu ermöglichen, offenbart die Erfindung, dass das Verdampfen des erhitzten SiO₂-Einsatzmaterials eine Injektionsphase in einer Expansionskammer umfasst, in der das SiO₂-Einsatzmaterial - insbesondere in flüssiger Form - in feine Tröpfchen zerstäubt wird, wobei die Tröpfchen einem mittleren Durchmesser von weniger als 5 µm, vorzugsweise weniger als 2 µm, aufweisen.

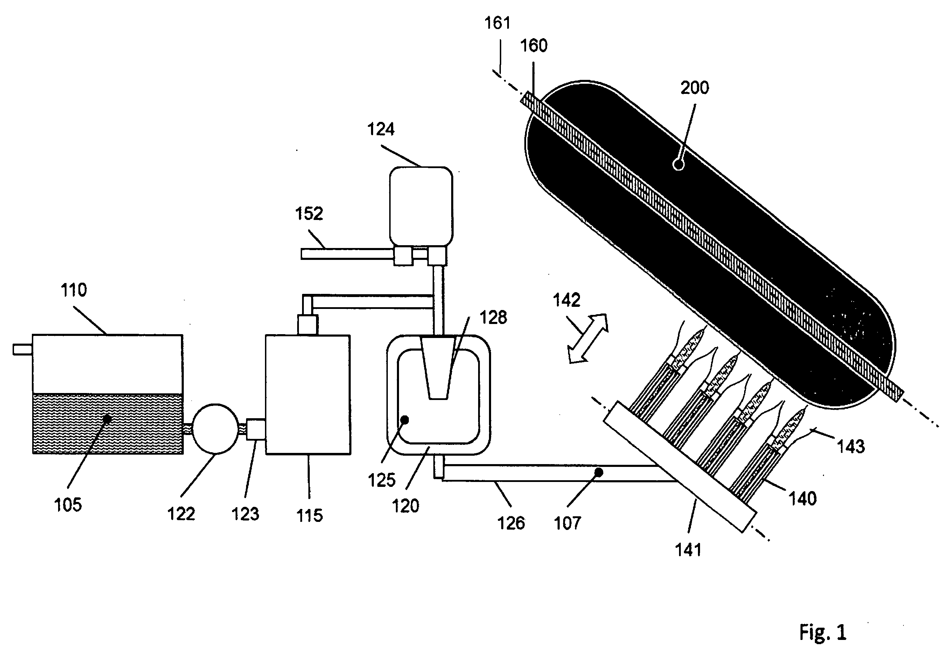

Die in **Figur 1** dargestellte Vorrichtung dient zur Herstellung eines SiO₂-Sootkörpers 200. Entlang eines Trägerrohres 160 aus Aluminiumoxid ist eine Vielzahl in einer Reihe angeordneter Flammhydrolysebrenner 140 angeordnet. Bei einer auf höhere Produktivität abzielenden Verfahrensabwandlung wird anstelle nur eines Brenners 140 eine Vielzahl von Abscheidebrennern eingesetzt, die zur Soot-Abscheidung in einer gemeinsamen Brennerreihe entlang des rotierenden Trägers reversierend hin- und herbewegt werden, wobei jede der Brennerflammen nur eine Teillänge des Trägerrohres 160 überstreicht.

Das SiO₂-Einsatzmaterial 105 weist vorzugsweise mehr als 95 Gew.-%, bevorzugt mehr als 98 Gew.-%, insbesondere mehr als 99,5 Gew.-% des Polyalkylsiloxans D4 auf und wird der Reaktionszone in gasförmiger Form zugeführt und dabei durch Oxidation und/oder Hydrolyse und/oder Pyrolyse zu SiO₂ zersetzt. Die Reaktionszone ist beispielsweise eine Brennerflamme oder ein Plasma. In der Reaktionszone entstehen SiO₂-Partikel 148, die unter Bildung des SiO₂-Sootkörpers auf der Ablagerungsfläche 160 schichtweise niedergeschlagen werden. Die SiO₂-Partikel 148 selbst liegen in Form von Agglomeraten oder Aggregaten von SiO₂-Primärpartikeln mit Partikelgrößen im Nanometerbereich vor.

Die Flammhydrolysebrenner 140 sind auf einem gemeinsamen Brennerblock 141 montiert, der parallel zur Längsachse 161 des Trägerrohrs 160 zwischen zwei, in Bezug auf die Längsachse 161 ortsfesten Wendepunkten hin- und herbewegt wird und der senkrecht dazu verschiebbar ist, wie dies die Richtungspfeile 142 andeuten. Die Brenner 140 bestehen aus Quarzglas; ihr Mittenabstand zueinander beträgt 15 cm.

Den Flammhydrolysebrennern 140 ist jeweils eine Brennerflamme 143 zugeordnet, die eine Reaktionszone im Sinne der Erfindung darstellt. In ihr werden SiO₂-Partikel gebildet und auf der Zylindermantelfläche des um seine Längsachse 161 rotierenden Trägerrohrs 160 abgeschieden, so dass schichtweise ein Sootkörper 200 mit einem Außendurchmesser von 350 mm aufgebaut wird. Während des Abscheideprozesses stellt sich auf der Sootkörperoberfläche 200 eine Temperatur von etwa 1200°C ein. Den Flammhydrolysebrennern 140 werden jeweils als Brennergase Sauerstoff und Wasserstoff zugeführt sowie als Einsatzmaterial für die Bildung der SiO₂-Partikel der SiO₂-Einsatzdampf 107. Im Rahmen der Erfindung umfasst der Begriff Polyalkylsiloxane sowohl Polyalkylcyclosiloxane als auch deren lineare Homologe.

Die Herstellung des SiO₂-Einsatzdampfes 107 aus mehr als 95 Gew.-%, bevorzugt mehr als 98 Gew.-%, insbesondere mehr als 99,5 Gew.-% des Polyalkylsiloxans D4 erfolgt mittels eines Verdampfersystems 120, das einen Vorratsbehälter 110 für das flüssige Gemisch, eine Flüssigkeitspumpe 122, ein Durchflussmessgerät 123 für Flüssigkeit, einen MFC (mass flow controller) 124 für die geregelte Zufuhr eines Stickstoff-Trägergasstroms 152 und eine beheizbare Verdampfungskammer 125 - auch Expansionskammer - mit einer Zerstäuberdüse 128 umfasst. Der Vorratsbehälter 110, eine Pumpe 122 und eine Zerstäuberdüse 128 sind mittels flexibler metallischer Leitungen miteinander verbunden. Der Vorratsbehälter 110 wird auf eine Temperatur von 130-170°C erhitzt, und die erhitzte Flüssigkeit mittels der Pumpe 122 über das Durchflussmessgerät 123 in exakter Dosierung der Zerstäuberdüse 128 zugeführt. In und mittels der Zerstäuberdüse wird das SiO₂-Einsatzmaterial 105 in feine Tröpfchen - auch als SiO₂-Tröpfchen bezeichnetzerstäubt, wobei die SiO₂-Tröpfchen einen mittleren Durchmesser von weniger als 5 µm, vorzugsweise weniger als 2 µm, aufweisen. Dabei kann in der Verbindungsleitung zwischen Durchflussmessgerät 123 und Zerstäuber 128 ein Konzentrationsdetektor zur Überwachung der Zusammensetzung des SiO₂-Einsatzmaterials 105 und/oder des SiO₂-Einsatzdampfes 107 und/oder der SiO₂-Tröpfchen vorgesehen sein.

Bei dem Zerstäuber 128 - auch als Zerstäuberdüse bezeichnet - kann es sich um einen Ultraschallzerstäuber handeln. Diese Zerstäuberdüse 128 stellt sicher, dass das flüssige SiO₂-Einsatzmaterial in feine Tröpfchen zerstäubt wird, wobei die Tröpfchen einem mittleren Durchmesser von weniger als 5 µm, vorzugsweise weniger als 2 µm, aufweisen. Je nach Ausgestaltung kann dem SiO₂-Einsatzmaterials 105 und/oder den Tröpfen ein Stickstoff-Trägergasstrom über den MFC 123 mit einem Druck von 1,5 bar bis 5 bar zugeführt werden.

In einer vorteilhaften Ausführungsform zerstäubt die Zerstäuberdüse 128 das SiO₂-Einsatzmaterials 105 in feine Tröpfchen mit einem maximalen Durchmesser von 1 µm und schmaler Tröpfchengrößenverteilung mit einem mittleren Durchmesser (d₅₀-Wert) von 0,7 µm, und sprüht unmittelbar danach diese Tröpfchen in einer Injektionsphase in die Expansionskammer 125 des Verdampfers 120 ein. Der Verdampfer 120 hat eine Innentemperatur von 195°C, so dass die feinen Flüssigkeitstöpfchen unmittelbar verdampfen und der Dampfstrom einem ortsfesten Flussteiler zugeführt und von diesem über wärmeisolierte flexible Medienzufuhrleitungen auf die einzelnen Abscheidebrenner 140 aufgeteilt wird.

In den Flussteiler münden auch eine Zufuhrleitung für die Brenngase Sauerstoff und Wasserstoff sowie eines Hilfsgases (Sauerstoff), das in der Brennerflamme 143 zwischen dem Strom des Einsatzmaterials und dem Strom des Brenngases eingesetzt wird, und das einer frühzeitigen Durchmischung entgegenwirkt. Die Mischung von Brenngasen und dem SiO₂-Einsatzdampf 107 erfolgt somit erst in der heißen Zone der Brennerflamme 143. Nach Abschluss des Abscheideprozesses wird ein Rohr aus porösem SiO₂-Soot (Sootrohr) erhalten.

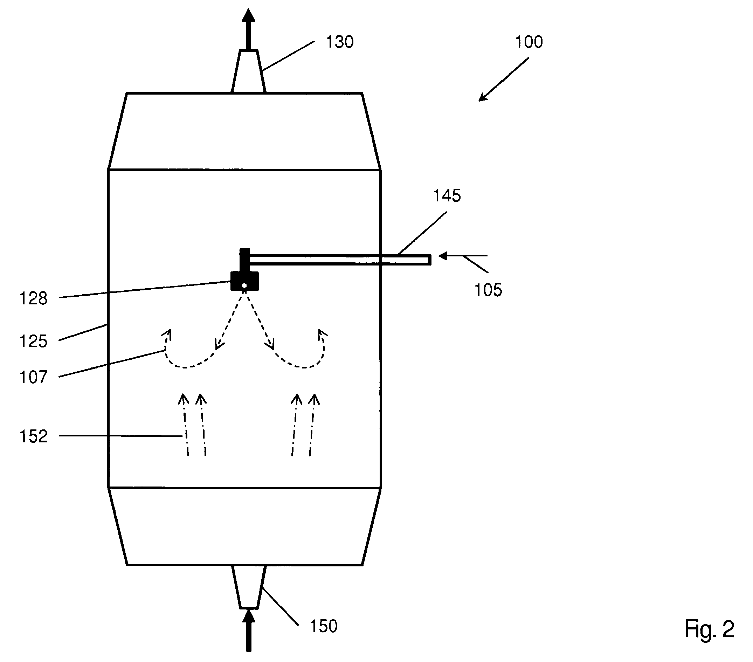

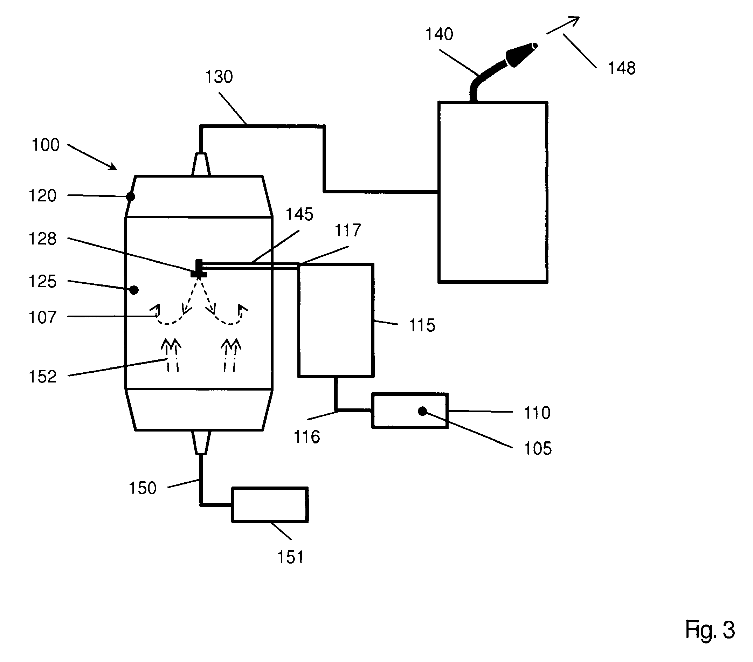

**Figur 2** und **Figur 3** zeigen das System 100 zur Herstellung von Quarzglas, welches das erfindungsgemäße Verfahren nutzt. Dabei wird das SiO₂-Einsatzmaterial 105 erhitzt und eine die Zerstäubung findet mittels einer Zerstäuberdüse 128 statt, die ein Ultraschall System aufweist. Das System 100 weist dazu einen Vorratstank 110 auf, aus dem das flüssige SiO₂-Einsatzmaterial 105 mittels einer nicht dargestellten Pumpe in eine Vorheizeinrichtung 115 gepumpt wird. Mittels bekannter Verfahren wird das flüssige SiO₂-Einsatzmaterial 105 in der Vorheizeinrichtung 115 auf eine erhöhte Temperatur aufgeheizt. Nach Durchströmen der Vorheizeinrichtung 115 wird das flüssige SiO₂-Einsatzmaterial 105 in die Zerstäuberdüse gepumpt. Dort findet dann das Zerstäuben der Flüssigkeit sowie das injizieren der Tröpfchen in die Expansionskammer statt. In der Expansionskammer 125 findet der Übergang der flüssigen SiO₂-Tröpfchen in den gasförmigen SiO₂-Einsatzdampf 107 statt. Über eine Leitung 130 strömt der SiO₂-Einsatzdampf 107 zu dem Brenner 140, wo eine pyrolytische oder hydrolytische Umsetzung des SiO₂-Einsatzdampfes in SiO₂-Partikel erfolgt.

Die Vorheizeinrichtung 115 weist einen Zulauf 116 und einen Ablauf 117 auf. Durch den Zulauf 116 wird das SiO₂-Einsatzmaterial 105 in der Vorheizvorrichtung 115 zugeführt. Innerhalb der Vorheizeinrichtung 115 findet eine Erwärmung des SiO₂-Einsatzmaterials 105 statt. Dieses kann durch die Verwendung eines Heißölsystems oder eines elektrischen Heizelementes in den Wänden der Vorheizeinrichtung erfolgen. Um eine gleichmäßige Aufheizung des flüssigen SiO₂-Einsatzmaterials 105 unter Vermeidung heißer Bereiche zu erzielen, hat es sich als vorteilhaft erwiesen, wenn die Vorheizeinrichtung 115 einen Strömungskanal aufweist, welcher von Heißölkanälen umgeben ist. Der so realisierbare flüssig-zuflüssig Hitzetransfer erzielt eine gleichmäßige Erhitzung des flüssigen SiO₂-Einsatzmateriales 105. Diese Art der gleichmäßigen Erwärmung stellt sicher, dass es nicht zu temperaturbedingten chemischen Umsetzung der Polyalkylsiloxane kommt. Das erhitzte flüssige SiO₂-Einsatzmaterial 105 wird von der Vorheizeinrichtung 115 in die Expansionskammer 125 durch eine Zuführungsleitung 145 abgegeben.

Die Expansionskammer 125 definiert ein Innenvolumen für die freie Ausdehnung des SiO₂-Einsatzdampfes. Um diese Verdampfung der SiO₂-Tröpfchen in den gasförmigen Einsatzdampf zu erzielen, hat es sich als vorteilhaft erwiesen, wenn in der Vorheizeinrichtung 115 die Temperatur des flüssigen SiO₂-Einsatzmaterials über den Siedepunkt des SiO₂-Einsatzmaterials bei dem Betriebsdruck der Expansionskammer erhöht wird. Eine bevorzugte Betriebstemperatur für die Vorheizeinrichtung 115 beträgt ungefähr 180 °C. Der Siedepunkt von D4 bei Atmosphärendruck beträgt ungefähr 175 °C. Um zu vermeiden, dass das flüssige SiO₂-Einsatzmaterial siedet, ist ein Rückdruck in der Vorheizeinrichtung erforderlich. Auf diese Weise wird der flüssige Reaktant als eine unterkühlte (komprimierte) Flüssigkeit in der Vorheizeinrichtung 115 gehalten.

Wie die Figur 3 verdeutlicht, fließt das flüssige SiO₂-Einsatzmaterial aus der Vorheizvorrichtung 115 durch die Zuführungsleitung 145 in den Innenraum der Expansionskammer 125. Die Vorheizeinrichtung 115 heizt das flüssige SiO₂-Einsatzmaterial 105 genügend auf, so dass dieser nahezu vollständig verdampft, während dessen Druck beim Eintreten in das Innenvolumen der Expansionskammer 125 abfällt. Eine solche sofortige Verdampfung findet nur dann statt, wenn die Vorheizeinrichtung 115 die Temperatur des flüssigen SiO₂-Einsatzmaterials über den Siedepunkt des SiO₂-Einsatzmaterials bei dem Betriebsdruck der Expansionskammer 125 erhöht hat. Die Menge der Tröpfchen des SiO₂-Einsatzmaterials, die sofort verdampfen, hängt somit von der Heizmenge ab, die in der Vorheizeinrichtung 115 dem flüssigen SiO₂-Einsatzmaterial zugeführt wird.

Alternativ ist es auch möglich, das System 100 zu nutzen, ohne dass das SiO₂-Einsatzmaterial 105 erhitzt wird. Dabei findet eine Zerstäubung des SiO₂-Einsatzmaterials lediglich mittels der Zerstäuberdüse 128 statt, ohne dass das SiO₂-Einsatzmaterial auf eine erhöhte Temperatur erhitzt wird. Ein zusätzlicher Wärmeeintrag kann dabei durch ein Trägergas erfolgen, welches beispielsweise ebenfalls durch die Zerstäuberdüse 128 geführt wird. Im prinzipiellen Aufbau unterscheidet sich solch eine Ausführungsvariante von der in Figur 3 gezeigten nur dadurch, dass keine Vorheizeinrichtung 115 benötigt wird.

Als Verdünnungsmittel 152 hat sich insbesondere Stickstoff als vorteilhaft erwiesen. Andere Verdünnungsmittel, wie beispielsweise Argon oder Helium, können ebenfalls verwendet werden, wenn dieses erwünscht ist. Hierbei handelt es sich um Gase, die sich in Bezug auf Polyalkylsiloxane inert verhalten, so dass Oxidations-, Polymerisations- oder Zersetzungsreaktionen zwischen der Flüssigkeit und dem Trägergas, insbesondere unter Druck und höherer Temperatur, und damit eine nicht reproduzierbare Veränderung der Zusammensetzung des Einsatzmaterials vermieden werden. Durch das Hinzuführen des Verdünnungsmittels wird der Partialdruck des flüssigen SiO₂-Einsatzmaterials - hier der Tröpfchen des SiO₂-Einsatzmaterials - in der Expansionskammer 125 vermindert und so dessen Taupunkt erniedrigt. Dadurch bedarf es keiner hohen Erhitzung des SiO₂-Einsatzmaterials in der Vorheizeinrichtung 115. Vielmehr reichen Temperaturen zwischen 130°C und 170°C aus, um eine vollständige Umsetzung des SiO₂-Einsatzmaterials in den SiO₂-Einsatzdampf sicherzustellen. Ziel ist es dabei, dass das Verdampfen des SiO₂-Einsatzmaterials eine Injektionsphase umfasst, in der das Einsatzmaterial in flüssiger Form in feine Tröpfchen zerstäubt wird, und eine Verdampfungsphase, in der die feinen Tröpfchen durch Kontakt mit einem heißen Trägergas, aber ohne Kontakt mit Wandungen der Expansionskammer 125 schnell und effizient vollständig verdampft wird.

Die Figur 3 verdeutlicht die erfindungsgemäße Verdampfung. Das aufgeheizte SiO₂-Einsatzmaterial 105 wird durch die Zuführungsleitung 145 der Expansionskammer 125 zugeführt. Am Ende der Zuführungsleitung 145 im Inneren der Expansionskammer 125 weist die Zuführungsleitung 145 einen düsenartigen Zerstäuberdüse 128 auf. Mittels der Zerstäuberdüse 128 - die vorzugsweise ein Ultraschallzerstäuber ist - wird das flüssige SiO₂-Einsatzmaterial 105 in feine Tropfen zerstäubt, welche einen mittleren Durchmesser von weniger als 5 µm, bevorzugt weniger als 2 µm, insbesondere weniger als einem µm aufweisen. Besonders bevorzugt Messreihen ergaben sich zwischen 0,5 µm und 20 nm (d₅₀-Wert). Der Medianwert oder d₅₀-Wert ist dabei als Maß für die mittlere Teilchengröße die wichtigste Kenngröße. Der d₅₀-Wert beschreibt jenen Wert, bei dem 50 Prozent der Tröpfchen feiner sind und die anderen 50% grober sind als d₅₀.

Durch den Druckabfall, der beim Austritt aus der Zerstäuberdüse 128 auftritt wird ein wesentlicher Teil der Tröpfchen in die Gasphase überführt. Zusätzlich wird durch die Medienleitung 150 ein auf ca. 130°C bis ca. 200°C vorgewärmter Stickstoffstrom in die Expansionskammer 125 und/oder die Zerstäuberdüse 128 geleitet. Vorteilhafterweise weist der Stickstoffstrom eine Temperatur auf, die im Wesentlichen - also auf +/- 10°C - der Temperatur des flüssigen SiO₂-Einsatzmaterials 105 entspricht. Der Stickstoffstrom kann der Sprührichtung des flüssigen SiO₂-Einsatzmaterials 105 entgegen strömen, um so eine starke Vermischung und eine ausreichende Wärmeübertragung sicherzustellen.

Es ist nicht vorgesehen, dass sich Teile des flüssigen SiO₂-Einsatzmaterials 105 - die Tröpfchen- an den Wänden der Expansionskammer 125 niederschlagen und/oder dort thermisch verdampft werden. Durch die Leitung 130 findet der Abfluss des gasförmigen SiO₂-Einsatzdampfes 107 zu dem Brenner 140 statt. Im Brenner 140 wird der SiO₂-Einsatzdampfes 107 durch Pyrolyse, Oxidation oder Hydrolyse zu SiO₂-Partikel 148 - auch als SiO₂ oder Soot oder SiO₂-Soot bezeichnet - umgesetzt.

### Bezugszeichenliste

- 100: System
- 105: SiO₂-Einsatzmaterial
- 107: SiO₂-Einsatzdampf
- 110: Vorratstank / Vorratsbehälter
- 115: Vorheizeinrichtung
- 116: Zulauf
- 117: Ablauf
- 120: Verdampfer / Verdampfersystem
- 122: Flüssigkeitspumpe
- 123: Durchflussmessgerät
- 124: MFC (mass flow controller)
- 125: Expanionskammer / Verdampfungskammer
- 126: Leitung
- 128: Zerstäuberdüse
- 130: Leitung
- 140: Brenner / Flammhydrolysebrenner
- 141: Brennerblock
- 142: Bewegung von 140
- 143: Brennerflamme
- 145: Zuführungsleitung
- 148: SiO₂-Soot
- 150: Medienleitung
- 151: Vorratsbehälter
- 152: Verdünnungsmittel
- 160: Ablagerungsfläche / Trägerrohr
- 161: Längsachse von 160
- 200: Sootkörper

## Patentansprüche

1. Verfahren zur Herstellung von synthetischem Quarzglas, umfassend die Verfahrensschritte:
(A) Bereitstellen eines flüssigen SiO₂-Einsatzmaterials (105), welches mehr als 70 Gew.-% des Polyalkylsiloxans Octomethycyclotetrasiloxan D4 aufweist,
(B) Verdampfen des flüssigen SiO₂-Einsatzmaterials (105) in einen gasförmigen SiO₂ Einsatzdampf (107),
(C) Umsetzen des SiO₂-Einsatzdampfes (107) zu SiO₂ Partikeln,
(D) Abscheiden der SiO₂ Partikel auf einer Ablagerungsfläche (160) unter Bildung eines SiO₂ Sootkörpers (200),
(E) Verglasen des SiO₂-Sootkörpers unter Bildung des synthetischen Quarzglases,
**dadurch gekennzeichnet, dass**
das Verdampfen des erhitzten SiO₂-Einsatzmaterials (105) eine Injektionsphase in einer Expansionskammer (125) umfasst, in der das SiO₂-Einsatzmaterial (105) in feine Tröpfchen zerstäubt wird, wobei die Tröpfchen einem mittleren Durchmesser von weniger als 5 µm, vorzugsweise weniger als 2 µm, aufweisen.

2. Verfahren nach wenigstens einem der vorhergehenden Ansprüche, **dadurch gekennzeichnet, dass** das flüssigen SiO₂-Einsatzmaterial (105) mehr als 95 Gew.-% insbesondere mehr als 99,5 Gew.-% des Polyalkylsiloxans D4 aufweist.

3. Verfahren nach wenigstens einem der vorhergehenden Ansprüche, **dadurch gekennzeichnet, dass** das Verdampfen die Schritte umfasst:
• Erhitzen des SiO₂-Einsatzmaterials (105),
• Einführen des erhitzten SiO₂-Einsatzmaterials (105) in eine Expansionskammer (125), so dass zumindest ein erster Teil des SiO₂- Einsatzmaterials (105) in Folge eines Druckabfalls verdampft.

4. Verfahren nach wenigstens einem der vorhergehenden Ansprüche, **dadurch gekennzeichnet, dass** das Verdampfen die Schritte umfasst:
• Erhitzen des SiO₂-Einsatzmaterials (105),
• Einführen des erhitzten SiO₂-Einsatzmaterials (105) in eine Expansionskammer (125),
• Vermischen des SiO₂-Einsatzmaterials (105) mit einem erhitzten Verdünnungsmittel (152), so dass zumindest ein zweiter Teil des SiO₂-Einsatzmaterials (105) in Folge einer Senkung des Taupunktes verdampft.

5. Verfahren nach einem der Ansprüche 3 oder 4, **dadurch gekennzeichnet, dass** das SiO₂- Einsatzmaterial (105) infolge des Druckabfalls und/oder der Senkung des Partialdruckes zu mindestens 99,995 Gew.-%, bevorzugt mindestens 99,9995 Gew.-% in den SiO₂-Einsatzdampf (107) überführt wird.

## Claims

1. A method for producing synthetic quartz glass, comprising the steps of:
(A) providing a liquid SiO₂ feedstock material (105), which comprises more than 70% by wt. of the polyalkylsiloxane D4,
(B) vaporizing the SiO₂ feedstock material (105) into a gaseous SiO₂ feedstock vapor (107),
(C) converting the SiO₂ feedstock vapor (107) into SiO₂ particles,
(D)depositing the SiO₂ particles on a deposition surface (160) so as to form a SiO₂ soot body (200),
(E) vitrifying the SiO₂ soot body (200) while forming the synthetic quartz glass, **characterized in that**
vaporizing the heated SiO₂ feedstock material (105) comprises an injection phase during which said feedstock material is injected into an expansion chamber (125) in which the SiO₂ feedstock material (105) is atomized into fine droplets, the droplets having a mean diameter of less than 5 µm, preferably less than 2 µm.

2. The method according to claim 1, **characterized in that** the liquid SiO₂ feedstock material (105) comprises more than 95% by wt., particularly more than 99.5% by wt., of the polyalkylsiloxane D4.

3. The method according to at least one of the preceding claims, **characterized in that** vaporizing comprises the steps of:
• heating the SiO₂ feedstock material (105),
• introducing the heated SiO₂ feedstock material (105) into an expansion chamber (125), so that at least a first part of the SiO₂ feedstock material (105) vaporizes due to a pressure drop.

4. The method according to at least one of the preceding claims, **characterized in that** vaporizing comprises the steps of:
• heating the SiO₂ feedstock material (105),
• introducing the heated SiO₂ feedstock material (105) into an expansion chamber (125),
• mixing the SiO₂ feedstock material (105) with a heated diluent (152), so that at least a second part of the SiO₂ feedstock material (105) vaporizes due to a decrease in the dew point.

5. The method according to any one of claims 3 or 4, **characterized in that** the SiO₂ feedstock material (105) is converted due to the pressure drop and/or the reduction of the partial pressure at at least 99.995% by wt., preferably at at least 99.9995% by wt., into the SiO₂ feedstock vapor (107).

## Revendications

1. Procédé pour la fabrication de verre de quartz synthétique, comprenant les étapes de procédé :
(A) préparation d'un matériau liquide de SiO₂ (105), qui présente plus de 70 % en poids de polyalkylsiloxane octaméthylecyclotétrasiloxane D4
(B) évaporation du matériau liquide SiO₂ (105) en une vapeur gazeuse de SiO₂ (107),
(C)transformation de la vapeur de SiO₂ (107) en particules de de SiO₂,
(D) précipitation des particules de SiO₂ sur une surface de dépôt en formant un corps de suie de SiO₂ (200),
(E) vitrification du corps de suie SiO₂ en formant un verre de quartz synthétique,
**caractérisé en ce**
**que** l'évaporation du matériau liquide de SiO₂ (105) comprend une phase d'injection) dans la chambre d'expansion (125) dans laquelle le matériau liquide de SiO₂ (105) est pulvérisé en fines gouttelettes, les gouttelettes présentant un diamètre moyen inférieur à 5 µm, de préférence inférieur à 2 µm.

2. Procédé selon l'une des revendications précédentes 1 ou 2, **caractérisé en ce que** le matériau liquide de SiO₂ (105) présente plus de 95% en poids en particulier de plus de 99,5 % en poids de polyalkylsiloxane D4.

3. Procédé selon l'une des revendications précédentes, **caractérisé en ce que** l'évaporation comprend les étapes suivantes :
• chauffage du matériau liquide de SiO₂ (105),
• introduction du matériau liquide de SiO₂ chauffé (105) dans une chambre d'expansion (125) de sorte qu'au moins une première partie du matériau liquide de SiO₂ (105) s'évapore à la suite d'une chute de pression.

4. Procédé selon l'une des revendications précédentes, **caractérisé en ce que** l'évaporation comprend les étapes suivantes :
• chauffage du matériau liquide de SiO₂ (105),
• introduction du matériau liquide de SiO₂ (105) dans une chambre d'expansion (125),
• mélange du matériau liquide de SiO₂ (105) avec un diluant chauffé (152) de sorte qu'une seconde partie du matériau liquide de SiO₂ (105) s'évapore à la suite d'une réduction du point de rosée.

5. Procédé selon l'une des revendications 3 ou 4, **caractérisé en ce que** le matériau liquide de SiO₂ (105) est transformé en vapeur gazeuse de SiO₂ (107) à la suite de la chute de pression et/ou de la réduction de la pression partielle à au moins 99,995 % en poids, de préférence 99,9995 % en poids.
